# FASCICULE DE BREVET EUROPEEN

(11) **EP 0 938 691 B1**
(45) Date de publication et mention de la délivrance du brevet: **28.03.2001**
(21) Numéro de dépôt: 97913283.4
(22) Date de dépôt: 07.11.1997
(51) Int. Cl.: G02B 27/01, G02B 23/12

(54) **CASQUE AVEC SYSTEME DE VISION DE NUIT ET OPTIQUE SUBSTITUABLE POUR LA VISION DE JOUR**
HELM MIT NACHTSICHTGERAET UND AUSWECHSELBARER OPTIK FUER TAGESSICHT
HELMET WITH NIGHT VISION SYSTEM AND OPTIC CAPABLE OF BEING SUBSTITUTED FOR DAY VISION

(30) Priorité: 12.11.1996 FR 9613741
(43) Date de publication de la demande: 01.09.1999
(73) Titulaire: THOMSON-CSF SEXTANT, 78141 Vélizy Villacoublay (FR)
(72) Inventeur: POTIN, Laurent, Thomson-CSF S.C.P.I., F-94117 Arcueil Cedex (FR); BAUDOU, Joel, Thomson-CSF S.C.P.I., F-94117 Arcueil Cedex (FR)
(74) Mandataire: Guérin, Michel
(86) Numéro de dépôt international: FR9702011
(87) Numéro de publication internationale: WO9821618

(56) Documents cités:
- EP-A- 0 384 880
- EP-A- 0 511 058
- EP-A- 0 671 646
- GB-A- 2 077 942
- GB-A- 2 179 542
- GB-A- 2 254 160
- US-A- 4 000 419
- US-A- 5 467 479
- H SCHREYER: "Integrated helmet system with image intensifier tubes" DISPLAYS, vol. 15, no. 2, mai 1994, OXFORD, GB, pages 98-105, XP000511187

## Description

La présente invention concerne un visuel de casque de pilote de véhicule optimisé pour la vision de nuit et pour la vision de jour. Elle s'applique notamment aux casques de pilotes d'hélicoptères armés ou d'avions d'armes.

Un visuel de casque est un dispositif permettant d'afficher des informations en superposition à la vue du paysage.

La présentation au pilote d'informations adaptées, par exemple sous forme de symboles, permet une aide au pilotage et à la navigation. Et pour des véhicules armés un réticule assure une aide à la visée d'une arme.

A l'intérieur du casque, un générateur de symboles comprend un tube cathodique sur l'écran duquel une image des symboles est formée. Le casque comprend aussi une optique de relais pour le transport de cette image jusqu'à un combineur qui assure une présentation de l'image transportée en superposition à la vue du paysage.

Le combineur est généralement réalisé par une partie de la visière ayant subi un traitement de surface pour réfléchir une image vers l'oeil du pilote tout en permettant à celui-ci d'observer de jour le paysage par transparence.

Pour permettre, de plus, la vision de nuit, des visuels de casque comprennent un intensificateur de lumière intégré. L'image de la scène nocturne est reçue par un objectif de prise de vue puis est intensifiée par l'intensificateur de lumière.

L'intensificateur de lumière comprend une photocathode en entrée et un écran cathodique en sortie. Les photons reçus sur l'objectif de prise de vue sont transformés en électrons par la photocathode. L'intensificateur de lumière accélère et multiplie ces électrons pour finalement former une image intensifiée sur son écran cathodique.

L'image intensifiée du paysage d'une part, et l'image des symboles d'autre part, sont mélangées par un mélangeur pour former une seule image qui est transportée jusqu'au combineur. Le combineur réfléchit cette image et la superpose à la scène nocturne très sombre.

Cependant, la technologie actuelle d'un intensificateur de lumière intégrable à un casque conduit à une luminosité réduite de l'image intensifiée. Ainsi le mélangeur favorise l'image intensifié par rapport à l'image du générateur de symboles, afin que le pilote observe une image intensifiée du paysage sans être ébloui par des symboles superposés trop brillants.

Typiquement le mélangeur est tel que la luminosité de l'image mélangée est constituée par 75 % de la luminosité de l'image intensifiée et par 25 % de celle de l'image des symboles.

Pour la vision de jour avec un casque comportant un visuel à intensificateur de lumière intégré, le pilote éteint l'intensificateur. Il ne se forme pas d'image intensifiée et le mélangeur ne transmet que l'image des symboles ; cette image est transportée jusqu'au combineur et elle permet au pilote d'observer les symboles superposés au paysage diurne. L'objectif de prise de vue et l'intensificateur de lumière sont alors inutiles.

Ainsi en mission de jour, un casque avec visuel à intensificateur de lumière intégré contraint le pilote à porter sur sa tête des éléments inutiles qui sont lourds et volumineux.

De plus, le mélangeur atténue l'image du générateur de symbole, en transmettant environ un quart de sa luminosité et cette image atténuée est superposée par le combineur à la vue du paysage diurne très lumineux. La luminosité des symboles est insuffisante par rapport à celle du paysage et le pilote ne voit pas bien les symboles lors des missions de jour.

Ces deux inconvénients s'avèrent majeurs pour les visuels de casaue connus assurant une vision de iour et une vision de nuit.

Des casques comportant un système de vision de jour et de nuit sont notamment connus des documents EP-A-384 880 et EP-A-0 511 058.

L'invention a pour but une bonne perception, par le pilote, des symboles superposés en vision de jour comme en vision de nuit.

Pour cela l'objet de l'invention est un casque comprenant un système de vision de nuit, un générateur d'image, une optique de mélange permettant le mélange des rayons lumineux issus du système de vision de nuit et des rayons lumineux issus du générateur d'image et une optique fixe en aval de l'optique de mélange,
- une première optique de mélange ayant un premier coefficient de transmission pour les rayons issus du générateur d'image,
- une optique de substitution ayant les mêmes caractéristiques optiques que l'optique de mélange pour les rayons issus du générateur d'image mais avec un deuxième coefficient de transmission supérieur au premier,
- et un logement en amont de l'optique fixe pour recevoir de manière amovible soit l'optique de mélange, soit l'optique de substitution,
caractérisé en ce qu'il présente une architecture modulaire avec un module de nuit, comprenant l'optique de mélange et le système de vision de nuit, et un module de jour comprenant l'optique de substitution.

Le module de nuit est optimisé pour les missions de nuit tandis que le module de jour est optimisé pour les missions de jour.

Le pilote effectue lui-même l'échange de module en fonction de ses besoins en dispositif de visualisation selon le type de mission et selon l'état de la luminosité ambiante au cours de la mission.

En vision de nuit avec le module de nuit et la mise sous tension du système de vision de nuit, le pilote perçoit des symboles superposés à l'image intensifiée du paysage qui est fournie par l'intensificateur de lumière du système de vision de nuit. La luminosité de ces symboles et celle de l'image intensifiée sont compatibles avec une observation confortable pour le pilote.

En vision de jour, le pilote enlève le module de nuit puis il place, dans l'emplacement ainsi libéré, le module de jour. Ce module assure une bonne perception des symboles superposés à un paysage très lumineux.

De plus, le module de jour est beaucoup plus léger pour la tête du pilote que l'ensemble comprenant l'optique de mélange et le système de vision de nuit. Cet allégement permet de réduire sensiblement la gêne et la fatigue du porteur du casque lors des missions de jour.

Le remplacement d'un module par l'autre est effectué par le pilote lui-même lorsqu'il porte le casque par une extraction manuelle du module en place et une insertion aisée de l'autre module. L'ajustement est automatique.

Le remplacement s'effectue rapidement, il est possible en cours de vol car la vue directe du paysage à travers le combineur est maintenue lorsqu'aucun module n'est inséré dans le logement.

Pour une vision binoculaire, le casque présente deux équipements complets, l'un pour l'oeil droit et l'autre pour l'oeil gauche ; soit deux modules de nuit et deux modules de jour.

L'invention sera mieux comprise à l'aide de la description faite en référence aux figures annexées dans lesquelles :
- la figure 1 présente un schéma du visuel de casque selon l'invention pour la vision de nuit.
- la figure 2 présente un schéma du visuel de casque selon l'invention pour la vision de jour.
- la figure 3 présente une réalisation de casque selon l'invention.
- la figure 4 présente un module de nuit, un module de jour et l'emplacement dans lequel l'un ou l'autre des modules peut s'insérer.

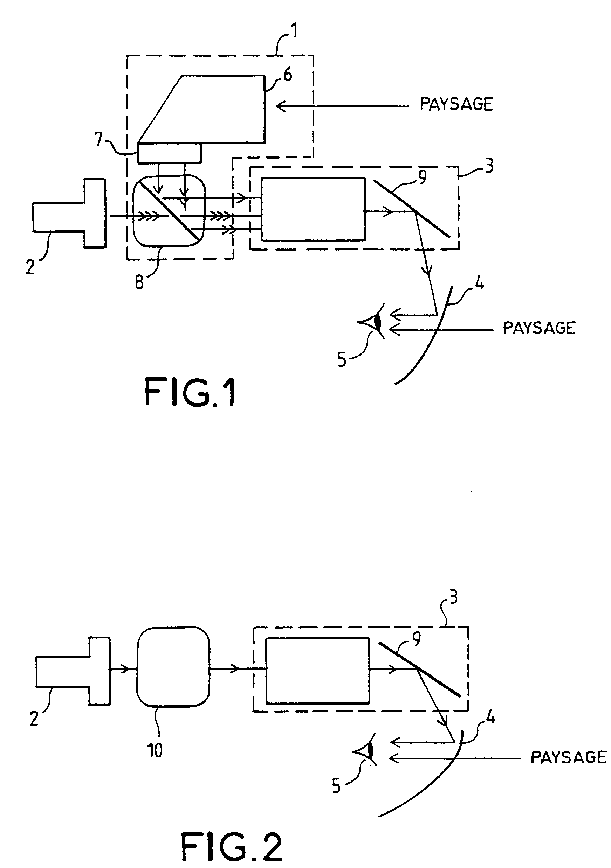

Pour la vision de nuit, un casque selon l'invention comprend un visuel dont le schéma est présenté sur la figure 1. Ce visuel est équipé d'un module de nuit 1, inséré entre un générateur d'image 2 et une optique fixe 3.

Le générateur d'image 2 est par exemple un générateur de symboles.

L'image obtenue en sortie du module de nuit est transportée par l'optique fixe 3 jusqu'à un combineur 4 qui réfléchit cette image vers l'oeil 5 du pilote. Le pilote observe cette image en superposition à la perception que son oeil lui fournit naturellement du paysage nocturne.

Le module de nuit 1 comprend un objectif de prise de vue 6 et un intensificateur de lumière 7 coopérant, lorsque l'intensificateur est mis sous tension, pour réaliser une image intensifiée d'une partie du paysage nocturne ; cette partie du paysage est celle qui émet les photons que reçoit l'objectif de prise de vue 6.

Le module de nuit comprend de plus une optique de mélange 8 recevant ladite image intensifiée d'une part et l'image formée par le générateur de symboles 2 d'autre part.

L'optique de transport de ce visuel comprend l'optique de mélange 8 et l'optique fixe 3.

En sortie de l'optique de mélange 8, une image unique, correspondant à l'image intensifiée du paysage, sur laquelle sont superposés des symboles, est envoyée en entrée de l'optique fixe 3.

L'optique de mélange 8 transmet, par exemple, 25 % de la luminosité de l'image des symboles et 75 % de celle de l'image intensifiée.

Cette optique de mélange 8 favorise l'image intensifiée par rapport à l'image des symboles lors de la fabrication de ladite image unique.

La luminosité des symboles ainsi visualisés est adaptée à la faible luminosité de l'image intensifiée ; l'observation du paysage avec les symboles est confortable pour le pilote en mission de nuit.

L'optique fixe 3 peut comprendre un miroir 9 pour replier le trajet optique entre la sortie de l'optique de mélange 8 d'une part et le combineur 4 d'autre part, réalisant ainsi un dispositif compact.

Pour la vision de jour, le schéma d'un visuel de casque selon l'invention est présenté sur la figure 2. Ce visuel est équipé d'un module de jour 10, inséré entre le générateur d'image 2 et l'optique fixe 3, tous deux précédemment décrits pour la vision de nuit.

Le module de jour 10 reçoit l'image formée par le générateur de symboles 2 et l'envoie en entrée de l'optique fixe 3.

L'optique du module de jour fait partie de l'optique de transport du visuel.

L'optique du module de jour transmet pratiquement 100 % de la luminosité de l'image des symboles.

L'image des symboles n'est pas atténuée ce qui permet une bonne perception des symboles superposés au paysage diurne très lumineux.

Avec le module de nuit, l'optique du casque est optimisée pour la vision nocturne.

Avec le module de jour, l'optique du casque est optimisée pour la vision diurne.

Le module de nuit 1 d'un casque selon l'invention est amovible ; il peut être déposé et remplacé par le module de jour 10. Les modules peuvent être installés dans un même logement situé entre le générateur de symboles 2 et l'optique fixe 3, ce logement n'étant pas représenté sur le schéma symbolique des figures 1 et 2.

L'optique du module de jour 10 est nommée optique de substitution. L'optique de mélange et l'optique de substitution présentent les mêmes caractéristiques pour l'optique géométrique, mais elles diffèrent d'un point de vue photométrique par des coefficients différents de transmission de luminosité.

Sur les figures 1 et 2 le combineur 4 est par exemple constitué par une visière faisant partie du casque.

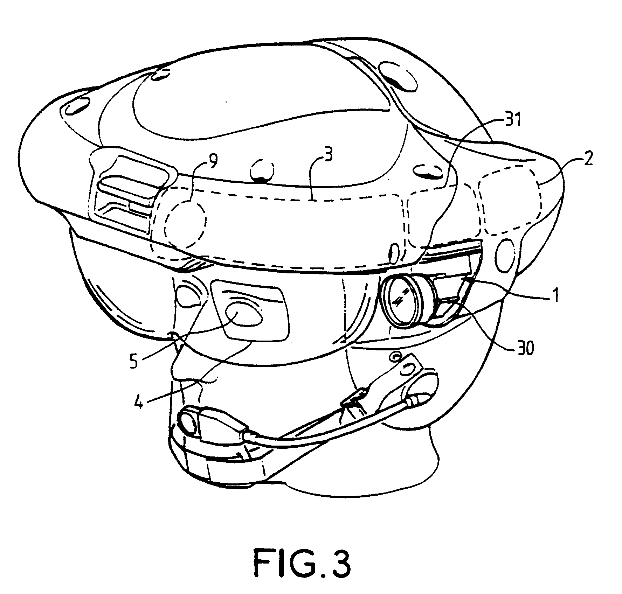

Dans une réalisation de l'invention représentée sur la figure 3, le casque comprend un visuel selon l'invention pour chaque oeil. Sur la figure 3, on voit plus particulièrement le visuel correspondant à l'oeil gauche.

Pour ce visuel gauche, l'écran du générateur de symboles 2 est intégré dans le casque au voisinage supérieur de l'oreille gauche du pilote, le module de nuit 1 est placé au niveau de la tempe et l'optique fixe 3 assure le transport d'une image, formée au voisinage de la tempe, jusqu'au combineur 4, lui-même réalisé par une partie de la visière du casque ; l'optique fixe 3 comprend un miroir 9 placé au niveau du front du pilote. Sur la figure 3, les emplacements de ces divers éléments à l'intérieur du casque sont représentés en traits pointillés.

Le visuel correspondant à l'oeil droit n'est pas représenté sur la figure 3, il comprend des éléments équivalents placés symétriquement par rapport au plan de symétrie du visage du pilote.

Pour réduire les coûts de réalisation industrielle, les éléments pour l'oeil droit et pour l'oeil gauche sont les plus identiques possible.

La description suivante correspond au visuel gauche. Sur la figure 3, on remarque une aspérité 30, au niveau du module de nuit 1, permettant une préhension aisée de ce module avec la main gauche du pilote. Une simple traction de la main vers le bas permet la dépose du module de nuit 1 par retrait hors du logement 31 localisé entre le générateur 2 et l'optique fixe 3.

Le logement 31 est aussi bien adapté au module de nuit 1 qu'au module de jour 10.

La pose d'un module consiste à placer ledit module au voisinage inférieur du logement 31 avec la main gauche puis à pousser le module vers le haut jusqu'à son blocage dans le logement 31.

Le module de gauche peut aussi être saisi et manipulé par la main droite du porteur du casque.

La dépose et la pose sont aisées, elles ne se font pas nécessairement en atelier, mais peuvent être réalisées pendant le pilotage du véhicule.

Le pilote optimise le visuel de son casque pour la mission en cours en choisissant le module adapté. Et le module qui n'est pas monté sur le casque peut par exemple être porté dans une poche du vêtement du pilote.

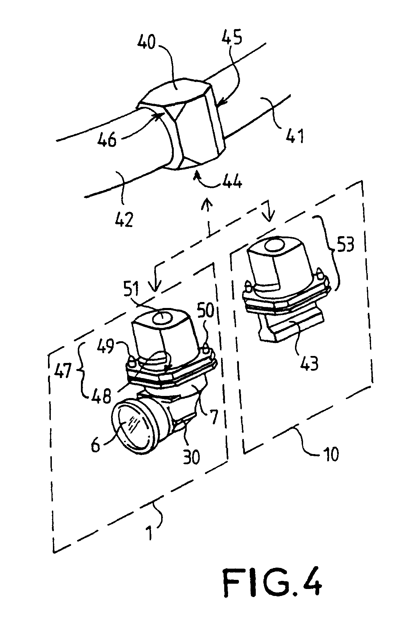

Sur la figure 4, le logement 31, déjà décrit, est matérialisé par le boîtier 40 placé entre une partie 42 de l'optique fixe 3 et une partie 41 du générateur de symboles 2.

Le boîtier 40 peut contenir soit le module de nuit 1, soit le module de jour 10 ; ces deux modules sont aussi représentés sur la figure 4.

Le boîtier 40 est ouvert sur sa face inférieure 44. Lorsque le boîtier 40 est vide, un module peut y être inséré par sa face inférieure 44.

Le boîtier laisse entrer par sa face 45, commune avec ladite partie 41 du générateur de symboles, la lumière émise par l'écran du générateur de symboles.

Le boîtier 40 laisse sortir une image par la face 46 commune avec la partie 42 de l'optique fixe 3.

Sur la figure 4, le module de nuit 1 présente un objectif de prise de vue 6 et un intensificateur de lumière 7 formant la partie inférieure du module 1 ; les axes optiques de ces deux éléments sont par exemple orthogonaux. Cette partie inférieure du module de nuit 1 ne pénètre pas dans le logement 31 du boîtier 40.

Sur cette figure 4, on voit l'aspérité 30 de préhension du module de nuit 1, une autre aspérité, par exemple sensiblement symétrique par rapport au plan vertical passant par l'axe optique de l'objectif 6, n'est pas visible et l'ensemble de ces deux aspérités permet la préhension en pince par les doigts du pilote, par exemple avec l'index gauche sur l'aspérité 30 et le pouce gauche sur ladite aspérité symétrique.

La partie supérieure 47 du module de nuit 1 contient l'optique de mélange 8. C'est cette partie supérieure qui peut pénétrer dans le logement 31.

L'optique de mélange est un élément de l'ensemble de l'optique de transport, cette dernière assure, pour l'image formée sur l'écran du générateur d'image 2, le déplacement jusqu'au combineur 4 d'une part, et des corrections d'aberrations d'autre part. Le positionnement de l'optique de mélange, comme celui de tout autre élément optique, est critique.

Selon une caractéristique de l'invention, la partie supérieure 47 du module de nuit 1 est positionnée à l'aide d'une translation pure et d'une butée fixe, cet ensemble garantit l'invariance des performances optiques lors du changement de module.

La translation pure est un guidage long dont l'emploi est aisé et qui assure une bonne tenue des performances optiques.

La butée fixe permet un réglage initial du positionnement et fidélise les performances optiques.

Un tel système de positionnement est par exemple réalisé, comme sur la figure 4, par un appui plan, un pied et une douille à bille.

La limite entre la partie inférieure et la partie supérieure 47 du module 1 est matérialisée par une excroissance présentant une surface plane 48, s'adaptant au bord, lui aussi plan, de la face inférieure 44 du boîtier 40 ; ceci réalise un appui plan.

La surface 48 présente de plus, deux pieds 49 et 50 dont l'insertion dans le boîtier 40 assure le blocage en rotation du module 1.

Chaque pied 49 et 50 est par exemple à symétrie de révolution avec un axe de symétrie orthogonal au plan de la surface 48, une partie cylindrique de base circulaire contiguë à ladite surface 48 et une extrémité conique facilitant son insertion dans un enfoncement du boîtier 40.

Pour chaque pied du module, le boîtier 40 comprend un enfoncement qui peut être une douille à bille.

Lors de la mise en place du module dans le casque, chaque pied s'insère dans l'ouverture de la douille par son extrémité conique puis chaque partie cylindrique de pied assure, en coopération avec les billes de la douille, le guidage long jusqu'à l'appui plan de la surface plane 48 du module avec le bord de la face inférieure 44 du boîtier.

Le maintien du module dans le boîtier est par exemple réalisé par influence magnétique.

Sur la figure 4, on voit un aimant 51 fixé en haut du module 1, un autre aimant 52 fixé au fond du boîtier 40 n'est pas visible et ces deux aimants sont placés de telle sorte que, lorsque le module est inséré dans le boîtier ils coopèrent pour contrarier l'effet de la pesanteur s'appliquant naturellement sur ce module et ainsi maintenir la partie supérieure 47 du module dans le boîtier 40.

Ces aimants sont à entrefer non nul, ajusté pour obtenir une force de rappel suffisante pour garantir la tenue en vibration, tout en permettant une extraction manuelle aisée du module par le pilote.

Ces aimants contribuent aussi à assurer l'étanchéité lumineuse au niveau du boîtier et de l'élément amovible qu'est le module.

Un maintien des modules par encliquetage mécanique ou système à baïonnette serait également possible.

Le module de nuit 1 comprend un intensificateur de lumière alimenté électriquement par exemple à partir du casque. Dans ce cas, les contacts électriques pour l'alimentation du module de nuit 1 sont réalisés par pression. Lorsque le module est en place ceci permet une mise en place et un enlèvement aisés du module.

Le module de jour 10 comprend une optique qui transmet, sans atténuation, la lumière qu'elle reçoit de l'écran du générateur de symboles 2 lorsque le module de jour 10 est inséré dans le casque. Cette optique réalise les mêmes corrections d'aberration que l'optique de mélange 8.

Sur la figure 4, le module de jour 10 présente une prise 43 permettant la préhension par le pilote de ce module. Le module de jour 10 présente une partie supérieure 53, contenant l'optique de substitution, et de géométrie extérieure semblable à celle de la partie supérieure 47 du module de nuit 1. C'est la partie supérieure 53 qui pénètre dans le logement 31 du boîtier 40.

Le module de jour 10 est inséré dans le boîtier 40, y est maintenu et en est extrait de façon identique à celle décrite pour le module de nuit 1.

Le module de jour 10 présente l'avantage d'être plus léger que le module de nuit 1.

Le module de jour 10 n'est pas alimenté électriquement.

Dans une autre réalisation de l'invention, le module de nuit comprend, de plus, le tube cathodique du générateur d'image 2 et ses optiques assurant des corrections de distorsion. Le module de jour associé comprend, en plus de l'optique de substitution, un tube cathodique pour le générateur d'image 2 dont le réglage permet de réaliser la correction de distorsion de jour; le module de jour comprend aussi des contacts électriques permettant le fonctionnement dudit tube.

L'emplacement dans le casque est de dimensions adaptées aux modules de cette réalisation qui sont plus volumineux et plus lourds que les modules de la réalisation précédemment décrite.

L'ensemble présente l'avantage d'alléger encore et de simplifier le dispositif optique complet exploité par le porteur du casque en vision de jour, et ceci sans augmenter le poids du dispositif complet en vision de nuit.

## Revendications

1. Ensemble visuel de casque comprenant un casque, un système de vision de nuit (6,7), un générateur d'image (2), une optique de mélange (8) permettant le mélange des rayons lumineux issus du système de vision de nuit et des rayons lumineux issus du générateur d'image, une optique fixe (3) en aval de l'optique de mélange, ladite optique de mélange (8) comportant:
- un premier module optique de mélange (8) ayant un premier coefficient de transmission pour les rayons issus du générateur d'image,
- un second module optique (10) apte à se substituer au premier module optique de mélange et ayant les mêmes caractéristiques optiques que le premier module optique de mélange pour les rayons issus du générateur d'image mais ayant un deuxième coefficient de transmission supérieur au premier,
- et un logement (31) en amont de l'optique fixe pour recevoir de manière amovible, soit le premier module optique de mélange, soit le second module optique,
caractérisé en ce que le premier module optique de mélange est solidaire du système de vision de nuit, de sorte que le second module optique peut être placé dans le logement en remplacement d'un module de vision de nuit amovible comprenant le premier module optique de mélange et le système de vision de nuit.

2. Ensemble visuel de casque selon la revendication 1, caractérisé en ce que ledit module de vision de nuit amovible, ledit second module optique et ledit logement comportent chacun un aimant (51), et que lesdits aimants permettent le maintien, soit du module de vision de nuit amovible, soit du second module optique, dans le logement.

3. Ensemble visuel de casque selon la revendication 1 ou la revendication 2, caractérisé en ce ledit module de vision de nuit amovible et ledit second module optique comportent des plots de centrage (49,50) s'insérant dans ledit logement.

4. Ensemble visuel de casque selon l'une des revendications 1 à 3, caractérisé en ce que ledit module de vision de nuit amovible et ledit logement comportent des contacts électriques pour alimenter électriquement ledit système de vision de nuit.

5. Ensemble visuel de casque selon l'une des revendications 1 à 4, caractérisé en ce que le générateur d'image est également amovible, un premier tube à rayons cathodiques étant solidaire du premier module optique de mélange et un autre tube à rayons cathodiques étant solidaire du second module optique.

## Claims

1. Helmet visual assembly comprising a helmet, a night vision system (6, 7), an image generator (2), an optical mixing system (8) for mixing the light rays output by the night vision system and the light rays output by the image generator, and a fixed optical system (3) downstream of the optical mixing system, said optical mixing system (8) including:
- a first optical mixing module (8) having a first transmission coefficient for the rays output by the image generator,
- a second optical module (10) which can be substituted for the first optical mixing module and having the same optical characteristics as the first optical mixing module for the rays output by the image generator, but with a second transmission coefficient which is greater than the first,
- and a housing (31) upstream of the fixed optical system, for accommodating either the first optical mixing module or the second optical module in such a way that they can be removed,
characterised in that the first optical mixing module is integral with the night vision system, thereby enabling the second optical module to be placed in the housing as a replacement for a removable night vision module comprising the first optical mixing module and the night vision system.

2. Helmet visual assembly according to claim 1, characterised in that said removable night vision module, said second optical module and said housing each have a magnet (51), and in that said magnets make it possible to hold, in the housing, either the removable night vision module or the second optical module.

3. Helmet visual assembly according to claim 1 or claim 2, characterised in that said removable night vision module and said second optical module have centring pins (49, 50) which fit into said housing.

4. Helmet visual assembly according to one of claims 1 to 3, characterised in that said removable night vision module and said housing have electrical contacts for supplying electricity to said night vision system.

5. Helmet visual assembly according to one of claims 1 to 4, characterised in that the image generator is also removable, a first cathode-ray tube being integral with the first optical mixing module and another cathode-ray tube being integral with the second optical module.

## Patentansprüche

1. Helmsichtvorrichtung mit einem Helm, einem Nachtsichtsystem (6, 7), einem Bildgenerator (2), einer Mischoptik (8), mit der Lichtstrahlen aus dem Nachtsichtsystem und Lichtstrahlen aus dem Bildgenerator gemischt werden können, und mit einer festen Optik (3) hinter der Mischoptik, wobei die Mischoptik (8) aufweist:
- einen ersten optischen Modul (8) zum Mischen, der einen ersten Lichtdurchlaßkoeffizienten für die vom Bildgenerator kommenden Strahlen besitzt,
- einen zweiten optischen Modul (10), der gegen den ersten optischen Modul ausgetauscht werden kann und die gleichen optischen Merkmale wie der erste optische Modul für die vom Bildgenerator ausgehenden Strahlen, aber einen zweiten Lichtdurchlaßkoeffizienten besitzt, der größer als der erste ist,
- und einen Raum (31) vor der festen Optik aufweist, der abnehmbar entweder den ersten optischen Modul oder den zweiten optischen Modul aufnehmen kann,
dadurch gekennzeichnet, daß der erste optische Modul zum Mischen Teil des Nachtsichtsystems ist derart, daß der zweite optische Modul anstelle eines den ersten optischen Modul zum Mischen und das Nachtsichtsystem enthaltenden abnehmbaren Nachtsichtmoduls in den Raum eingesetzt werden kann.

2. Helmsichtvorrichtung nach Anspruch 1, dadurch gekennzeichnet, daß der abnehmbare Nachtsichtmodul, der zweite optische Modul und der Raum je einen Magneten (51) aufweisen und daß die Magneten den Halt des abnehmbaren Nachtsichtmoduls oder des zweiten optischen Moduls in dem Raum gewährleisten.

3. Helmsichtvorrichtung nach Anspruch 1 oder 2, dadurch gekennzeichnet, daß der abnehmbare Nachtsichtmodul und der zweite optische Modul Zentrierstifte (49, 50) enthalten, die in den Raum eindringen.

4. Helmsichtvorrichtung nach einem der Ansprüche 1 bis 3, dadurch gekennzeichnet, daß der abnehmbare Nachtsichtmodul und der Raum elektrische Kontakte aufweisen, um das Nachtsichtsystem mit elektrischer Energie zu versorgen.

5. Helmsichtvorrichtung nach einem der Ansprüche 1 bis 4, dadurch gekennzeichnet, daß der Bildgenerator auch abnehmbar ist, wobei eine erste Kathodenstrahlröhre sich im ersten optischen Modul zum Mischen und eine zweite Kathodenstrahlröhre im zweiten optischen Modul befindet.
